# FASCICULE DE BREVET EUROPEEN

(11) **EP 3 160 722 B1**
(45) Date de publication et mention de la délivrance du brevet: **04.12.2019**
(21) Numéro de dépôt: 15742060.5
(22) Date de dépôt: 28.06.2015
(51) Int. Cl.: B29D 30/06

(54) **INSERT DE MOULE COMPORTANT UNE TEXTURE À FORT CONTRASTE**
FORMEINSATZ MIT EINER KONTRASTREICHEN STRUKTURIERTEN OBERFLÄCHE
MOULD INSERT HAVING A HIGH-CONTRAST TEXTURED SURFACE

(30) Priorité: 30.06.2014 FR 1401467
(43) Date de publication de la demande: 03.05.2017
(73) Titulaire: Compagnie Générale des Etablissements Michelin, 63000 Clermont-Ferrand (FR)
(72) Inventeur: GUEUGNEAU, Anthony, F-63040 Clermond-Ferrand Cedex 9 (FR); MONTZIEUX, Stéphane, F-63040 Clermond-Ferrand Cedex 9 (FR); BLANCHET, Etienne, F-63040 Clermond-Ferrand Cedex 9 (FR); CALVEL, Romain, F-63040 Clermond-Ferrand Cedex 9 (FR)
(74) Mandataire: Roussy, Delphine
(86) Numéro de dépôt international: PCT/IB2015/001067
(87) Numéro de publication internationale: WO 2016/001732

(56) Documents cités:
- EP-A2- 1 063 071
- WO-A1-2009/007790
- WO-A1-2012/171802
- DE-A1-102007 005 455
- FR-A1- 2 939 714
- GB-A- 588 170
- US-A- 4 553 918
- US-A1- 2008 283 169
- US-A1- 2012 227 879

## Description

### DOMAINE TECHNIQUE DE L'INVENTION

La présente invention concerne un élément de moule pour pneumatique comprenant une surface d'appui et, à l'opposé, une surface de moulage, destinée à former la surface externe dudit pneumatique.

### ETAT DE LA TECHNIQUE ANTERIEURE

La surface des pneumatiques supporte une grande quantité de marquages destinés d'une part à donner des informations techniques sur la qualité du pneumatique, et d'autre part à permettre au consommateur de distinguer la marque et l'origine du produit. Ces marquages sont, en règle générale, obtenus par des motifs en relief disposés sur la surface du pneumatique et correspondent à des motifs en creux réalisés sur la surface de moulage. Usuellement, les moules de vulcanisation sont réalisés en métal avec un très bon aspect de finition de surface. Mais la surface externe du pneumatique qui en résulte, lisse et noire, a pour effet de renvoyer la lumière.

Le document WO2007/045425 décrit des types particuliers de textures à fort contraste sur pneumatique. Ces textures ont pour effet principal de piéger la lumière incidente et, par absorption de la lumière, de donner un aspect noir et mat à une partie du pneumatique. Cette absorption de lumière permet l'obtention d'une couleur noire plus intense et formant un meilleur contraste avec le reste de la surface du pneumatique. Le contraste est d'autant plus important lorsque la texture côtoie des surfaces brillantes sur le pneumatique.

Le contraste obtenu par cette absorption de lumière produit un effet visuel notable sur la finition du produit, souvent apparenté à l'aspect visuel du velours. Or, l'obtention des textures produisant un tel effet constitue encore à ce jour un challenge technologique qui n'est que partiellement solutionné. En effet, les procédés actuels sont relativement coûteux et fastidieux à mettre en œuvre, et permettent de produire uniquement certains types de motifs, à certains endroits, généralement faciles d'accès.

La demande de brevet WO 2010/076502 propose un ensemble de garniture pour moule de pneumatique comprenant une peau. La peau est délimitée par une première et une seconde surface opposées, la première surface étant destinée à être en contact avec un bloc support d'un moule de pneumatique, et une pluralité d'éléments de garniture en saillie de la seconde surface de la peau, ces éléments étant destinés à former des sculptures d'une partie d'une surface radialement externe d'un pneumatique. Un tel ensemble permet d'obtenir des sculptures classiques telles que celles de la bande de roulement des pneumatiques classiques.

La demande DE102007005455 concerne une enveloppe de moule de paroi latérale de pneumatique. Cette enveloppe comporte un motif en saillies et creux destiné au moulage de la paroi latérale du pneumatique. Ce motif est obtenu par gravure au laser ou par impression sur le moule. Le motif figure sur une partie de caoutchouc, de silicium ou plastique. Ce moule permet l'obtention d'un insert annulaire dans un creux de la paroi latérale.

La demande WO2009007790 décrit un appareil et un procédé de moulage de pneumatique. L'appareil comprend un moule doté d'une cavité de moulage dont la forme correspond à la partie extérieure du pneumatique vulcanisé, ainsi qu'une paire de coques axialement opposées et possédant chacune une surface de travail. La surface de travail est agencée de façon annulaire et est prédisposée pour opérer sur les parois latérales d'un pneumatique cru à vulcaniser. La surface de travail présente également une rainure annulaire le long de son développement. Un insert annulaire est monté de manière amovible dans la rainure annulaire et présente une face de moulage opposée à la cavité de moulage, qui comporte des marques graphiques destinées à être imprimées sur la paroi latérale du pneumatique.

Le document US 4 553 918 A décrit un moule pour la cuisson des pneumatiques qui vise à modifier rapidement la configuration d'un moule.

Il existe aujourd'hui un besoin pour des solutions permettant de produire des pneumatiques pourvus de textures noires intenses avec une grande souplesse et des coûts avantageux.

Pour pallier ces différents inconvénients, l'invention prévoit différents moyens techniques.

### EXPOSE DE L'INVENTION

Tout d'abord, un premier objet de l'invention consiste à prévoir un système de moulage ou élément de moule permettant une utilisation sur une grande variété de pneumatiques, et permettant de produire différents types de motifs ou textures.

Un autre objet de l'invention consiste à prévoir un système de moulage ou élément de moule pouvant être obtenu à des coûts et suivants des temps de production compétitifs.

Encore un autre objet de l'invention consiste à prévoir un système de moulage ou élément de moule permettant de disposer des motifs sans restriction de positionnement dans le moule, permettant d'obtenir sur le pneu des textures particulières sur la surface de la bande de roulement, par exemple une texture de type velours, ou un marquage graphique particulier.

Encore un autre objet de l'invention consiste à prévoir un système de moulage ou élément de moule permettant de modifier facilement et rapidement la configuration d'un moule pour produire un pneumatique avec une ou plusieurs textures différentes.

Pour ce faire, l'invention prévoit un élément de garniture selon la revendication 1, destiné à être rapporté dans un moule pour le moulage et la vulcanisation d'une bande de roulement de pneumatique, l'élément de garniture comprenant un corps et des inserts rapportés dans ce corps, au moins une partie des inserts comportant un motif qui comprend une pluralité d'éléments en creux ou en protubérance, ledit motif étant venu de matière avec les inserts.

Un tel élément de garniture procure une très grande souplesse pour la configuration et l'évolution des moules, tout en permettant la réutilisation des mêmes secteurs.

Selon l'invention, l'élément de garniture comporte un motif qui comprend un agencement organisé en une pluralité d'éléments, tout ou partie de ces éléments étant la répétition d'un même élément de base.

De manière avantageuse, l'insert de l'élément de garniture est conformé en garniture de moule tel qu'un cordon, lamelle, ou pluralité de cordons et/ou lamelles. Une telle architecture permet de mouler la texture du pneumatique dans une rainure (correspondant au cordon de la plaquette) ou une incision (correspondant à une lamelle de la plaquette) et apporte un aspect esthétique supplémentaire, par exemple un effet de profondeur.

Selon l'invention, la profondeur des motifs est inférieure ou égale à 15% de l'épaisseur de l'insert ou la hauteur des protubérances est inférieure ou égale à 15% de l'épaisseur de l'insert.

Selon un mode de réalisation avantageux, tout ou partie du motif est formé par des cavités coniques répartis dans le motif selon une densité au moins égale à une cavité conique par millimètre carré (mm²), chaque cavité conique ayant une section moyenne comprise entre 0,0005 mm² et 1 mm².

En variante, tout ou partie du motif est formé par des stries sensiblement parallèles entre elles, le pas des stries dans le motif étant au plus égal à 0,5 mm, chaque strie ayant une largeur moyenne comprise entre 0,02 mm et 0,5 mm.

Selon encore une autre variante, tout ou partie du motif forme en creux des parallélépipèdes de côté (C) compris entre 0,05 mm et 0,5 mm, de hauteur (Hp) comprise entre 0,05 mm et 0,5 mm, la distance entre deux parallélépipèdes adjacents dans la texture étant comprise entre 0,05 mm et 0.5 mm.

De manière avantageuse, l'insert comprend des éléments permettant une fixation par exemple par collage, vissage ou ancrage mécanique, démontable ou non. Le démontage est avantageusement utile pour permettre le nettoyage de la sculpture en cas d'encrassement ou pour changer l'insert.

Selon un mode de réalisation avantageux, l'épaisseur de l'élément de moule est avantageusement comprise entre 0,25 et 10 mm (ou même plus), et plus préférentiellement entre 0,25 et 6 mm.

L'ajout de motifs en protubérance permet de rigidifier l'insert. Les motifs en creux ne fragilisent pas l'insert du fait de leur très faible épaisseur relative.

Selon encore un mode de réalisation avantageux, les éléments en protubérance forment des brins, lesdits brins étant répartis dans le motif selon une densité au moins égale à un brin par millimètre carré (mm²), chaque brin ayant une section moyenne S comprise entre 0,0005 mm² et 1 mm².

En variante les éléments en protubérance forment des lames parallèles entre elles, le pas des lames dans le motif étant au plus égal à 0,5 mm, chaque lame ayant une largeur moyenne comprise entre 0,02 mm et 0,5 mm.

Selon encore une autre variante, tout ou partie des motifs creux forment des parallélépipèdes de côté (C) compris entre 0,05 mm et 0,5 mm, de hauteur (Hp) comprise entre 0,05 mm et 0,5 mm, la distance entre deux parallélépipèdes adjacents dans la texture étant comprise entre 0,05 mm et 0.5 mm.

Selon un autre mode de réalisation avantageux, les éléments en creux ou en protubérance présentent des formes et des distances variables entre eux.

Selon encore un autre mode de réalisation avantageux, les éléments en protubérance forment des cônes sur la surface du moule et la texture comprend une pluralité de cônes, lesdits cônes étant répartis dans la texture selon une densité au moins égale à un cône par millimètre carré (mm²), ces cônes présentant sur la surface du moule des diamètres équivalents (Dt) compris entre 0,03 mm et 1,2 mm.

L'élément de garniture selon l'invention peut être configurée pour moulage d'une zone de flanc de pneumatique, ou encore pour moulage d'une zone de bande de roulement de pneumatique.

De manière avantageuse, l'élément de garniture est réalisé par frittage laser. La mise en œuvre est prévue de sorte que les inserts comportent une texture, elle aussi fabriquée pas frittage laser. Ainsi, les éléments de moule, y compris les textures, sont avantageusement réalisées par frittage laser, ce mode de fabrication procurant l'avantage de permettre la mise en forme de textures très fines et/ou très complexes, tel que décrit dans ce qui suit.

Les inserts sont avantageusement destinés à être rapportés dans une garniture, principalement en aluminium.

L'invention prévoit également un moule à secteurs pour la vulcanisation de pneumatiques, comportant une pluralité d'éléments de garniture tels que préalablement définis.

### DESCRIPTION DES FIGURES

Tous les détails de réalisation sont donnés dans la description qui suit, complétée par les figures 1 à 8, présentées uniquement à des fins d'exemples non limitatifs, et dans lesquelles:
- la figure 1 est une vue en perspective d'un premier exemple d'éléments de moule rapportés sur un bloc support d'un moule selon l'invention;
- la figure 2a est une vue en perspective d'un exemple d'éléments de moule selon l'invention avant fixation sur un secteur ;
- la figure 2b est une vue en perspective d'un autre exemple d'élément de moule selon l'invention avant fixation sur un secteur, avec trois vues en coupe latérale afin d'illustrer des exemples de moyens de fixation de l'élément de moule sur un support ;
- la figure 3 présente un élément de moule comportant un motif formé de stries en creux dans le moule ;
- la figure 4 présente un élément de moule dans lequel les stries du motif ont une section de type pyramidale ;
- la figure 5 représente un motif comportant une pluralité de trous ;
- la figure 6 est une vue agrandie du motif de la figure 5 ;
- la figure 7 présente un élément de moule comportant un motif formé de brins en protubérance sur le moule ;
- la figure 8 présente un élément de moule comportant un motif formé de lames.

### DESCRIPTION DETAILLEE DE L'INVENTION

Par «motif» sur un moule, on entend un agencement organisé d'une pluralité d'éléments (stries, trous, brins, lames), tout ou partie de ces éléments étant la répétition d'un même élément de base, le motif présent sur le moule permettant d'obtenir une texture particulière sur un pneumatique.

Dans la description qui va suivre, des éléments sensiblement identiques ou similaires seront désignés par des références identiques.

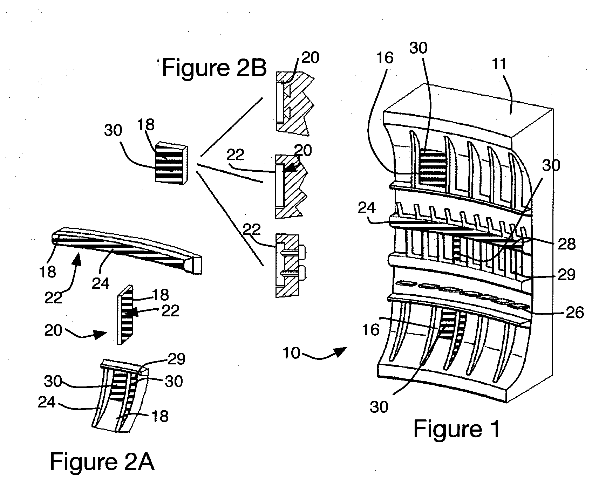

La figure 1 illustre un élément de garniture 10 d'un moule à secteurs (non représenté) pour la vulcanisation de pneumatiques. Cet élément de garniture 10 comprend un corps 11 avantageusement réalisé en alliage d'aluminium et comprenant notamment une pluralité de surfaces support 16 destinées à recevoir une pluralité d'inserts 18. Le corps 11 comporte par ailleurs un réseau d'éléments 24 de sculpture de pneumatique. Parmi les éléments 24 de sculpture, on retrouve notamment des lamelles 26 destinées à former des fentes circonférentielles dans la bande de roulement du pneumatique, ou des cordons circonférentiels 28 destinés à former un sillon longitudinal sur la bande de roulement du pneumatique. Les différents cordons 28 peuvent être reliés par des lamelles axiales 29 de manière à former le réseau d'éléments 24 de sculpture.

Chacun des inserts 18 comprend une première 20 et une seconde 22 surfaces opposées, la première surface 20 étant destinée à être en contact avec la surface support 16 de l'élément de garniture. Les inserts sont spécifiquement prévus pour permettre l'intégration sur le corps 11 de motifs 30 servant à produire des textures sur les pneumatiques qui seront moulés avec un moule pourvu d'une pluralités de corps 11. A cet effet, au moins une partie des inserts 18 comporte un motif 30 qui comprend une pluralité d'éléments en creux ou en protubérance, ledit motif étant venu de matière avec les inserts. En d'autres termes, chaque insert 18, incluant les motifs 30, est réalisé d'un seul tenant.

L'épaisseur de chaque insert 18 est comprise entre 0,25 et 10 millimètres ou même plus.

Tel qu'illustré aux figures 1, 2A et 2B, les inserts 18 peuvent prendre diverses formes, en fonction des diverses variantes de réalisation. Tout d'abord, les inserts sont avantageusement réalisés sous forme de plaquettes, tel que montré sur la figure 2B. Ces plaquettes s'insèrent sur les surfaces de support 16 du corps 11. Les inserts peuvent aussi prendre la forme de lamelles axiales 29 tel qu'illustré à la figure 1 et à la figure 2A. La figure 1 illustre enfin une autre variante dans laquelle les inserts forment des portions de cordons 28 circonférentiels. Ces deux dernières variantes, permettent d'obtenir des lamelles 29 et/ou des cordons 28 pourvus de motifs 30.

**Dans** ces diverses variantes de réalisation, ces motifs seraient difficilement réalisables s'ils devaient être mis en forme directement sur le corps 11.

**Pour** réaliser un tel insert 18, on procède avantageusement par frittage laser sélectif d'une poudre métallique. Lors de la fabrication de l'insert, on veille à ce que la forme de la première surface 20 soit complémentaire à la forme de la surface support 16 du corps 11 de manière à ce que l'insert 18 puisse coopérer correctement avec le corps.

La figure 2a illustre quelques exemples de réalisation d'inserts 18 pourvus de textures 30 sur les zones qui seront visibles après fixation sur un corps 11.

La figure 2b montre un exemple d'insert 18 pourvu d'une texture 30 avec différents exemples de mode de fixation à une surface de support 16. Les exemples illustrés comprennent une fixation à l'aide de queues d'aronde, par collage ou par vissage. La queue d'aronde correspond à un ancrage lors de la coulée de l'alliage d'aluminium de l'élément de garniture.

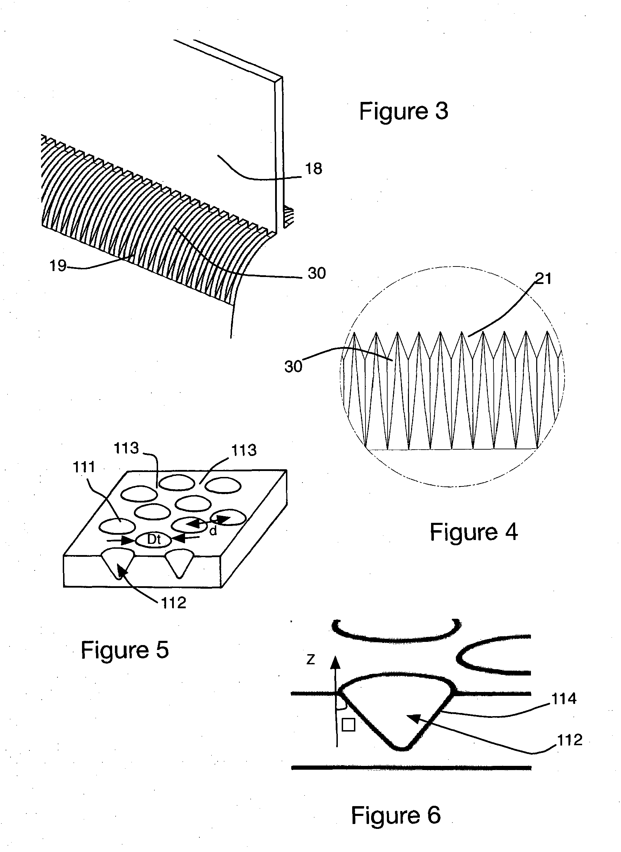

Dans les exemples tels que ceux des figures 1, 2a et 2b, l'étendue des zones texturées, les profils ainsi que les positionnements des zones texturées varient en fonction des modes de réalisation, les exemples illustrés n'étant fournis qu'à titre illustratif et non limitatif. En outre, les motifs peuvent prendre des formes striées, tel que représenté par exemple à la figure 3, montrant des stries 19 en forme de créneau, ou à la figures 4, montrant des stries 21 en forme de pyramide.

La figure 5 illustre le motif selon une première variante de réalisation non limitative du premier mode de réalisation. Dans cette variante, le motif est formé par une pluralité de cavités 112. Les cavités 112 sont ici en forme de cônes qui s'étendent dans la profondeur du moule et débouche sur le moule en formant des ouvertures circulaires 111. Les cavités 112 ont ainsi une section qui diminue dans la profondeur du moule. On notera que dans cette variante, les ouvertures 111 des cavités 112 ne se touchent pas. Les ouvertures 111 sont séparées par des zones intermédiaires 113. En outre, les ouvertures 111 sont régulièrement réparties sur le moule de sorte que la distance d entre chaque ouverture du motif est globalement similaire.

La figure 6 est une vue agrandie du motif de la figure 5. Tout ou partie des cavités a ici au moins une paroi 114 qui, selon une vue en coupe, forme un angle β compris entre 10° et 60° par rapport à une direction Z perpendiculaire au motif.

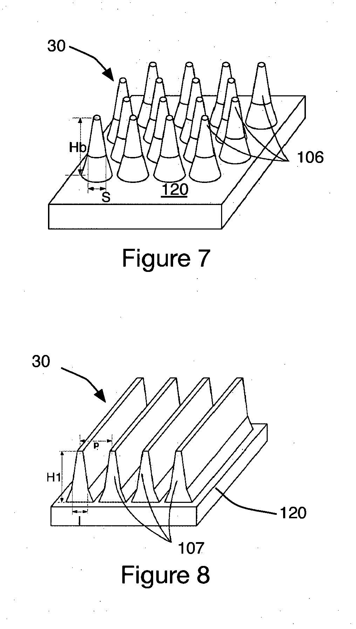

La figure 7 illustre un mode de réalisation dans lequel le motif 30 comporte une pluralité de brins 106. Les brins 106 étant répartis dans le motif selon une densité au moins égale à un brin par mm², chaque brin ayant une section moyenne S comprise entre 0,0005 mm² et 1 mm².

On notera que la section moyenne de chaque brin correspond à la moyenne des sections S mesurées à intervalles réguliers depuis la base du brin. Les brins 106 ont une forme globalement conique avec une section diminuant dans la hauteur Hb de ces brins.

La figure 8 illustre un mode de réalisation dans lequel le motif 30 comporte une pluralité de lames 107 parallèles entre elles, le pas des lames 107 dans le motif 30 étant au plus égal à 0,5 mm, chaque lame 107 ayant une largeur moyenne comprise entre 0,02 mm et 0,5 mm. On notera que la largeur moyenne correspond à la moyenne des largeurs I mesurées à intervalles réguliers dans la hauteur HI de la lame, la hauteur de chaque lame étant comprise entre 0,05 et 0,5 mm.

Dans une autre variante de réalisation, le motif comporte une combinaison de brins 106 et/ou et de lames 107.

L'invention n'est pas limitée aux exemples décrits et représentés et diverses modifications peuvent y être apportées sans sortir de son cadre, qui est défini dans les revendications. Ainsi, selon une autre variante de réalisation non limitative, les lames 107 de la figure 8 peuvent être discontinues. Elles présentent une partie plane entre elles. Elles peuvent en outre présenter entre elles des différences de section. De plus, les lames peuvent posséder des courbures ou des angles, notamment dans leur longueur. Elles peuvent en outre, être de longueur variable.

Ainsi, selon une autre variante de réalisation non limitative, les cavités 112 peuvent avoir une section parallélépipédique de côté C compris entre 0,05 mm et 0,5 mm, de hauteur Hp comprise entre 0,05 mm et 0,5 mm, la distance entre deux cavités adjacentes dans la texture étant comprise entre 0,05 mm et 0.5 mm. En variante la section des cavités peut être circulaire, polygonale (par exemple hexagonale). Avec les structures carrée ou polygonale, il est possible d'organiser plus facilement les ouvertures 111 les unes par rapport aux autres de sorte à limiter la surface des zones intermédiaires 113 entre ces ouvertures. Avec de telles formes d'ouvertures, on peut arriver plus aisément à des taux conséquents d'occupation des ouvertures sur le moule.

Dans le cas où les inserts sont démontables, pour adapter un moule à la fabrication d'un nouveau type de pneumatique, il suffit de retirer les inserts portés par les blocs supports qui correspondent à l'ancien type de pneumatique fabriqué, puis de rapporter, avantageusement en une seule opération, les nouveaux inserts 18 sur les surfaces 16 correspondantes.

Dans le cas où les éléments de garniture d'un moule sont fabriqués en coulant de l'aluminium, les inserts selon l'invention sont avantageusement ancrés lors de la coulée dans un moule plâtre ou une matrice acier. Cependant, on peut également prévoir une fixation par collage ou vissage dans un élément de garniture en aluminium ou autre alliage. Dans le premier cas, les inserts sont non démontables, alors que dans le second cas, les inserts peuvent être démontés, soit pour permettre leur remplacement ou leur nettoyage ou autre.

L'invention a été décrite en relation avec un moule prévu pour intégrer une pluralité d'éléments de garniture tels que celui illustré dans l'exemple de la figure 1. Elle peut également être mise en œuvre en relation avec un moule d'un autre type.

### Références numériques utilisées sur les figures

- 10: Elément de garniture
- 11: Corps

- 16: Surface de support
- 18: Insert
- 19: Strie en forme de créneau
- 20: Première surface
- 21: Strie en forme de pyramide
- 22: Seconde surface
- 24: Réseau d'éléments de sculpture de pneumatique
- 26: Lamelles
- 28: Cordons circonférentiels
- 29: Lamelles axiales

- 30: Motifs

- 106: Brins
- 107: Lames
- 111: Ouverture circulaire
- 112: Cavité
- 113: Zone intermédiaire
- 114: Paroi

## Revendications

1. Elément de garniture (10) destiné à être rapporté dans un moule pour le moulage et la vulcanisation d'une bande de roulement de pneumatique, ledit élément de garniture comprenant un corps et des inserts (18) rapportés dans ce corps, **caractérisé en ce que** au moins une partie des inserts (18) comporte un motif (30) comprenant, selon un agencement organisé, une pluralité d'éléments en creux (19, 21, 112) de profondeur inférieure ou égale à 15% de l'épaisseur de l'insert, ou en protubérance (106, 107) de hauteur inférieure ou égale à 15% de l'épaisseur de l'insert, tout ou partie de ces éléments étant la répétition d'un même élément de base, ledit motif étant venu de matière avec les inserts (18).

2. Elément de garniture (10) selon la revendication 1, dans lequel l'insert (18) est conformé en garniture de moule tel qu'un cordon, lamelle, ou pluralité de cordons et/ou lamelles.

3. Elément de garniture (10) selon l'une des revendications 1 ou 2, **caractérisé en ce que** tout ou partie du motif est formé par des cavités coniques répartis dans le motif (30) selon une densité au moins égale à une cavité conique par millimètre carré (mm²), chaque cavité conique ayant une section moyenne comprise entre 0,0005 mm² et 1 mm².

4. Elément de garniture (10) selon l'une des revendications 1 ou 2, **caractérisé en ce que** tout ou partie du motif est formé par des stries sensiblement parallèles entre elles, le pas des stries dans le motif (30) étant au plus égal à 0,5 mm, chaque strie ayant une largeur moyenne comprise entre 0,02 mm et 0,5 mm.

5. Elément de garniture (10) selon l'une des revendications 1 ou 2, **caractérisé en ce que** tout ou partie du motif forme en creux des parallélépipèdes de côté (C) compris entre 0,05 mm et 0,5 mm, de hauteur (Hp) comprise entre 0,05 mm et 0,5 mm, la distance entre deux parallélépipèdes adjacents dans la texture étant comprise entre 0,05 mm et 0.5 mm.

6. Elément de garniture (10) selon l'une des revendications 1 ou 2, **caractérisé en ce que** les éléments en protubérance forment des brins, lesdits brins étant répartis dans le motif (30) selon une densité au moins égale à un brin par millimètre carré (mm²), chaque brin ayant une section moyenne S comprise entre 0,0005 mm² et 1 mm².

7. Elément de garniture (10) selon l'une des revendications 1 ou 2, **caractérisé en ce que** les éléments en protubérance forment des lames parallèles entre elles, le pas des lames dans le motif étant au plus égal à 0,5 mm, chaque lame ayant une largeur moyenne comprise entre 0,02 mm et 0,5 mm.

8. Elément de garniture (10) selon l'une quelconque des revendications 1 à 7, **caractérisé en ce que** les éléments en creux ou en protubérance présentent des formes et des distances variables entre eux.

9. Elément de garniture (10) selon l'une quelconque des revendications précédentes, réalisé par frittage laser.

10. Moule à secteurs pour la vulcanisation de pneumatiques, comportant une pluralité d'éléments de garniture selon l'une des revendications 1 à 9.

## Patentansprüche

1. Auskleidungselement (10), das dazu bestimmt ist, für die Formung und Vulkanisierung eines Reifenlaufstreifens in einer Form eingebracht zu sein, das Auskleidungselement umfassend einen Körper und Einsätze (18), die in diesen Körper eingebracht sind, **dadurch gekennzeichnet, dass** zumindest ein Teil der Einsätze (18) ein Motiv (30) aufweist, umfassend, gemäß einer organisierten Anordnung, eine Mehrzahl vertiefter Elemente (19, 21, 112) mit einer Tiefe kleiner oder gleich 15 % der Dicke des Einsatzes, oder hervorstehender Elemente (106, 107) mit einer Höhe kleiner oder gleich 15 % der Dicke des Einsatzes, wobei alle oder ein Anteil dieser Elemente die Wiederholung eines selben Grundelements sind, wobei das Motiv einstückig mit den Einsätzen (18) ausgebildet ist.

2. Auskleidungselement (10) nach Anspruch 1, wobei der Einsatz (18) als Formauskleidung ausgebildet ist, wie beispielsweise ein Band, eine Lamelle oder eine Mehrzahl von Bändern und/oder Lamellen.

3. Auskleidungselement (10) nach einem der Ansprüche 1 oder 2, **dadurch gekennzeichnet, dass** das gesamte Motiv oder ein Teil davon von kegelförmigen Vertiefungen gebildet ist, die gemäß einer Dichte in dem Motiv (30) verteilt sind, die mindestens gleich einer kegelförmigen Vertiefung pro Quadratmillimeter (mm²) ist, wobei jede kegelförmige Vertiefung einen mittleren Querschnitt zwischen 0,0005 mm² und 1 mm² aufweist.

4. Auskleidungselement (10) nach einem der Ansprüche 1 oder 2, **dadurch gekennzeichnet, dass** das gesamte Motiv oder ein Teil davon von Riefen gebildet ist, die im Wesentlichen parallel zueinander verlaufen, wobei der Abstand der Riefen in dem Motiv (30) höchstens gleich 0,5 mm ist, wobei jede Riefe eine mittlere Breite zwischen 0,02 mm und 0,5 mm aufweist.

5. Auskleidungselement (10) nach einem der Ansprüche 1 oder 2, **dadurch gekennzeichnet, dass** das gesamte Motiv oder ein Teil davon vertieft Parallelepipede mit einer Seite (C) zwischen 0,05 mm und 0,5 mm, mit einer Höhe (Hp) zwischen 0,05 mm und 0,5 mm bildet, wobei der Abstand zwischen zwei benachbarten Parallelepipeden in der Textur zwischen 0,05 mm und 0,5 mm beträgt.

6. Auskleidungselement (10) nach einem der Ansprüche 1 oder 2, **dadurch gekennzeichnet, dass** die hervorstehenden Elemente Stiele bilden, wobei die Stiele gemäß einer Dichte in dem Motiv (30) verteilt sind, die mindestens gleich einem Stiel pro Quadratmillimeter (mm²) ist, wobei jeder Stiel einen mittleren Querschnitt S zwischen 0,0005 mm² und 1 mm² aufweist.

7. Auskleidungselement (10) nach einem der Ansprüche 1 oder 2, **dadurch gekennzeichnet, dass** die hervorstehenden Elemente Streifen bilden, die parallel zueinander verlaufen, wobei der Abstand der Streifen in dem Motiv höchstens gleich 0,5 mm ist, wobei jeder Streifen eine mittlere Breite zwischen 0,02 mm und 0,5 mm aufweist.

8. Auskleidungselement (10) nach einem der Ansprüche 1 bis 7, **dadurch gekennzeichnet, dass** die vertieften oder hervorstehenden Elemente Formen und Abstände aufweisen, die zueinander variabel sind.

9. Auskleidungselement (10) nach einem der vorhergehenden Ansprüche, das durch Lasersintern hergestellt ist.

10. Sektorenform zur Vulkanisierung von Reifen, umfassend eine Mehrzahl von Auskleidungselementen nach einem der Ansprüche 1 bis 9.

## Claims

1. Lining element (10) intended to be inserted into a mould for moulding and vulcanizing a tyre tread, the said lining element comprising a body and inserts (18) inserted into this body, **characterized in that** at least some of the inserts (18) comprise a pattern (30) comprising, in an organized arrangement, a plurality of recessed (19, 21, 112) with a depth less than or equal to 15% of the thickness of the insert or protruding (106, 107) elements with a height less than or equal to 15% of the thickness of the insert, the said pattern being formed as an integral part of the inserts (18).

2. Lining element (10) according to either of Claims 1 and 2, in which the insert (18) is configured as a mould lining such as a bar, a sipe blade, or a plurality of bars and/or sipe blades.

3. Lining element (10) according to any one of Claims 1 to 2, **characterized in that** all or part of the pattern is formed by conical cavities distributed through the pattern (30) with a density at least equal to one conical cavity per square millimetre (mm²), each conical cavity having a mean cross section comprised between 0.0005 mm² and 1 mm².

4. Lining element (10) according to any one of Claims 1 to 2, **characterized in that** all or part of the pattern is formed by substantially mutually parallel striations, the spacing of the striations in the pattern (30) being at most equal to 0.5 mm, each striation having a mean width comprised between 0.02 mm and 0.5 mm.

5. Lining element (10) according to any one of Claims 1 to 2, **characterized in that** all or part of the pattern forms recessed forms of parallelepipeds of side length (C) comprised between 0.05 mm and 0.5 mm, of height (Hp) comprised between 0.05 mm and 0.5 mm, the distance between two adjacent parallelepipeds in the texture being comprised between 0.05 mm and 0.5mm.

6. Lining element (10) according to any one of Claims 1 to 2, **characterized in that** the protruding elements form strands, the said strands being distributed through the pattern (30) with a density at least equal to one strand per square millimetre (mm²), each strand having a mean cross section S comprised between 0.0005 mm² and 1 mm².

7. Lining element (10) according to any one of Claims 1 to 2, **characterized in that** the protruding elements form mutually parallel strips, the spacing of the strips in the pattern being at most equal to 0.5 mm, each strip having a mean width comprised between 0.02 mm and 0.5 mm.

8. Lining element (10) according to any one of Claims 1 to 7, **characterized in that** the recessed or protruding elements have mutually variable shapes and distances between them.

9. Lining element (10) according to any one of the preceding claims, produced by laser sintering.

10. Segmented mould for vulcanizing tyres, comprising a plurality of lining elements according to one of Claims 1 to 9.
